Europäisches Patentamt

European Patent Office

Office européen des brevets

(19)

(11) **EP 0 917 684 B1**

(12) **FASCICULE DE BREVET EUROPEEN**

(45) Date de publication et mention
de la délivrance du brevet:
**24.05.2000 Bulletin 2000/21**

(21) Numéro de dépôt: **97932854.9**

(22) Date de dépôt: **08.07.1997**

(51) Int Cl.⁷: $G06K\ 7/00$, $G06K\ 19/07$

(86) Numéro de dépôt international:
**PCT/FR97/01230**

(87) Numéro de publication internationale:
**WO 98/06057 (12.02.1998 Gazette 1998/06)**

(54) **MICROCIRCUIT A FONCTIONNEMENT MIXTE, AVEC OU SANS CONTACT**

**MIKROSCHALTUNG MIT GEMISCHTER, KONTAKTLOSER ODER KONTAKTIERENDER, FUNKTIONSWEISE**

**MICROCIRCUIT WITH CONTACT AND NON-CONTACT OPERATING MODES**

(84) Etats contractants désignés:
**AT BE CH DE ES FR GB IT LI NL**

(30) Priorité: **05.08.1996 FR 9610032**

(43) Date de publication de la demande:
**26.05.1999 Bulletin 1999/21**

(73) Titulaire: **Inside technologies
69930 Saint-Clément-les-Places (FR)**

(72) Inventeur: **KOWALSKI, Jacek
13090 Aix en Provence (FR)**

(74) Mandataire: **Marchand, André
OMNIPAT,
24 Place des Martyrs de la Résistance
13100 Aix-en-Provence (FR)**

(56) Documents cités:
**US-A- 5 206 495          US-A- 5 285 370**

## Description

La présente invention concerne un microcircuit à deux modes de fonctionnement, avec ou sans contact.

Le marché des cartes à puce, et de façon générale celui des puces électroniques montées sur des supports portables, comprend actuellement deux domaines : celui des applications dites "à contact", et celui des applications "sans contact". Dans un proche avenir, les cartes à puce sans contact devraient fortement se développer, alors que, simultanément, de nombreuses cartes à contact continueront d'être utilisées. Aussi, pour rationaliser le marché des cartes à puces, on a songé à développer des microcircuits à fonctionnement mixte, avec ou sans contact, pouvant communiquer avec tout type de lecteur de carte à puce.

On connaît par le brevet US 5,206,495 un microcircuit de carte à puce à deux modes de fonctionnement, avec ou sans contact, dont on va rappeler la structure. Les références indiquées entre crochets sont relatives à la figure 3 de ce document.

Le microcircuit [2] de l'art antérieur comprend des plots de contact [3] pour le mode de fonctionnement avec contact et des bobines d'induction [4, 5] pour le mode de fonctionnement sans contact. Les bobines d'induction sont associées à un circuit redresseur [2.1.1] pour fournir une tension d'alimentation continue U1 en mode de fonctionnement sans contact. En mode de fonctionnement avec contact, une tension d'alimentation continue U2 est fournie par un plot d'alimentation [I6].

Essentiellement, le document de l'art antérieur propose d'envoyer à un micro-ordinateur [2.2], par l'intermédiaire d'un multiplexeur [2.1.3], les signaux reçus par les plots de contacts [3] et les signaux reçus par les bobines [4,5]. Les signaux reçus par les bobines [4, 5] sont appliqués au multiplexeur [2.1.3] par l'intermédiaire d'un convertisseur [2.1.4]. Le micro-ordinateur [2.2] forme ainsi un moyen de traitement du signal commun aux deux modes de fonctionnement, et le multiplexeur [2.1.3] forme un aiguillage permettant de connecter le micro-ordinateur aux contacts [3] ou au convertisseur [2.1.4] selon le mode de fonctionnement du microcircuit. La discrimination du mode de fonctionnement, pour la commande du multiplexeur [2.1.3], est faite par un comparateur [2.1.2] à deux entrées [E1, E2] délivrant à sa sortie [E3] un signal de discrimination appliqué au multiplexeur [2.1.3]. Le comparateur [2.1.2] reçoit sur une première entrée [E2] une tension continue U2 venant du plot d'alimentation [I6] et sur une deuxième entrée [E1] une tension continue U1 venant du redresseur [2.1.1] (voir aussi le préambule de la revendication 1).

Bien qu'à première vue satisfaisant, le microcircuit de l'art antérieur présente, en pratique, divers inconvénients.

Un premier inconvénient tient à la détection du mode de fonctionnement au moyen du comparateur précité [2.1.2], recevant sur ses entrées [E1, E2] les tensions d'alimentation U1 et U2. Les tensions U1, U2 sont également appliquées sur l'entrée d'alimentation [E4] du comparateur [2.1.2] par l'intermédiaire de diodes [D1, D2], indispensables pour ne pas mettre en court-circuit les deux entrées de comparaison [E1, E2]. Or, ces diodes provoquent une baisse sensible de la tension d'alimentation reçue par le comparateur, par exemple de 1 Volt dans un circuit intégré CMOS. Ainsi, pour que le comparateur [2.1.2] fonctionne, la tension minimale d'alimentation U1 ou U2 du microcircuit doit être de 1 V supérieure à la tension minimale d'alimentation du comparateur. Comme la tension U1 délivrée par le redresseur [2.1.1] en mode sans contact dépend de l'amplitude de la tension induite dans les bobines [4, 5], et par conséquent de la distance séparant le microcircuit de la source du champ magnétique (couplage inductif), la chute de tension dans la diode [D1] doit être compensée par une augmentation du couplage inductif et entraîne une diminution sensible de la distance maximale de communication pouvant être admise entre une carte à puce et un lecteur de carte, à puissance d'émission constante du champ magnétique. Pour fixer les idées, dans une carte à puce sans contact alimentée par induction à la fréquence normalisée de 13,56 MHz et pouvant fonctionner sous une tension très faible de l'ordre de 1 Volt (technologie CMOS), une chute de tension de 1 V dans la diode [D1] représente une diminution de plusieurs centimètres de la distance maximale carte/lecteur, la tension d'alimentation U1 devant être au moins égale à 2 V pour se trouver à 1 V sur l'entrée d'alimentation [E4] du comparateur.

Un autre inconvénient du microcircuit de l'art antérieur est la gestion d'une éventuelle ambiguïté entre les tensions d'alimentation U1, U2 du mode contact et du mode sans contact. Par "ambiguïté", on désigne le cas où, simultanément, les tensions d'alimentation U1 et U2 sont présentes. En particulier, la demanderesse a découvert que les doigts d'un utilisateur touchant les plots de contacts pendant le mode sans contact peuvent injecter dans le microcircuit des charges d'électricité statique pouvant perturber, voire bloquer, son fonctionnement. Dans le document de l'art antérieur, on propose que la sortie [E3] du comparateur, délivrant le signal de discrimination du mode de fonctionnement, soit de préférence non ambiguë selon la valeur des tensions U1, U2. Toutefois, la présente invention se base sur la constatation suivante : pour que la sortie du comparateur [2.1.2] soit non ambiguë lorsque des tensions U1, U2 sont simultanément présentes, et à des niveaux élevés, il faut que la priorité soit donnée arbitrairement à l'une seule des deux tensions. Si la priorité est donnée à la tension U1 du mode sans contact pour résoudre le cas d'ambiguïté lié à une tension électrostatique parasite sur les plots de contact, la sortie du comparateur doit être à 1 quand la tension U1 est présente, quelle que soit la tension U2. Si la sortie du comparateur ne dépend que de la tension U1, on peut conclure qu'il n'est d'aucune utilité de prévoir un comparateur. En définitive, l'idée d'utiliser un comparateur non ambigu pour la détermination du mode de fonctionnement entraîne certaines interrogations quand à sa mise en oeuvre pratique.

Encore un autre inconvénient du microcircuit de l'art antérieur réside dans le fait que, pour que les signaux du mode sans contact présents sur les sorties [K1-K5] du convertisseur [2.1.4] soient entièrement compatibles avec les signaux venant des plots de contact [I1-I6], ainsi qu'il est indiqué dans l'art antérieur, il est nécessaire que le convertisseur [2.1.4] transforme ces signaux en signaux reçus selon le protocole de communication du mode contact. Plus précisément, étant donné que, selon la norme ISO 7816, les signaux reçus sur des divers plots de contacts d'une carte à puce comprennent, respectivement, des données sous forme série, un signal d'horloge, un signal de remise à zéro, une tension d'alimentation, il suit que le convertisseur [2.1.4] doit fournir chacun de ces signaux sous forme série normalisée sur ses sorties correspondantes [K1-K6]. Ainsi, en pratique, le convertisseur [2.1.4] doit être un "convertisseur de protocole", ou "adaptateur", d'une grande complexité et d'un coût de réalisation élevé. Ici également, la mise en oeuvre de l'idée d'un multiplexage des signaux d'entrée vers un moyen commun de traitement des communications se heurte à d'importantes difficultés pratiques.

Ainsi, la présente invention a pour objectif de prévoir un microcircuit à deux modes de fonctionnement :

- qui puisse être mis en oeuvre de façon simple à partir de circuits d'interface classiques du type sans contact et du type à contact,
- qui comporte des moyens de détection du mode de fonctionnement ne présentant pas les inconvénients exposés ci-dessus,
- qui comporte un circuit de distribution d'une tension d'alimentation apte à gérer, à la mise sous tension, les conflits éventuels entre tension du mode contact et tension du mode sans contact, et assure la protection contre les décharges électrostatiques.

De façon générale, la présente invention propose un microcircuit :

- sans multiplexage des signaux d'entrée, les moyens de communication (ou d'interface) du mode contact et du mode sans contact étant matériellement distincts,
- comportant un interrupteur disposé au niveau du plot de réception de la tension d'alimentation du mode contact, la tension d'alimentation du mode sans contact pouvant être envoyée directement sur la ligne d'alimentation interne du microcircuit, sans perte de tension,
- dans lequel la discrimination du mode de fonctionnement est faite par détection de la tension alternative aux bornes de la bobine d'induction, au lieu d'être faite par une détection de la tension alternative redressée, et

- dans lequel la priorité est donnée au mode sans contact à l'apparition de la tension alternative.

Plus particulièrement, la présente invention prévoit un microcircuit à deux modes de fonctionnement, avec les caractéristiques de la revendication 1.

Selon un mode de réalisation, la sortie du circuit redresseur est connectée directement et en permanence à la ligne de distribution.

Selon un mode de réalisation, les moyens de commande du moyen interrupteur comprennent un détecteur d'oscillations de la tension alternative.

Selon un mode de réalisation, les moyens de commande du moyen interrupteur comprennent un détecteur à seuil de la tension alternative.

Selon un mode de réalisation, les moyens de commande du moyen interrupteur comprennent un circuit survolteur délivrant une tension de fermeture du moyen interrupteur.

Selon un mode de réalisation, le circuit survolteur comprend une première pompe de charges dont la sortie est appliquée à une capacité de stockage par l'intermédiaire d'un transistor piloté par une deuxième pompe de charges fonctionnant en phase avec la première pompe de charges.

Selon un mode de réalisation, le moyen interrupteur comprend un transistor NMOS et un transistor PMOS en série, pour la protection contre les décharges électrostatiques positives et négatives.

Selon un mode de réalisation, les moyens de communication spécifiques au mode contact sont alimentés directement à partir du plot d'alimentation, et les moyens communs aux deux modes de fonctionnement sont alimentés à partir de la ligne de distribution.

La présente invention concerne également une carte à puce, comprenant un microcircuit selon l'invention.

Ces caractéristiques de la présente invention, ainsi que d'autres, seront exposées plus en détail dans la description suivante d'une structure de microcircuit à deux modes de fonctionnement selon l'invention, d'un système de distribution d'une tension d'alimentation du microcircuit, et de divers modes de réalisation de certains éléments du système de distribution, en relation avec les figures jointes parmi lesquelles :

- la figure 1 représente l'architecture générale d'un microcircuit à fonctionnement mixte selon l'invention, pour carte à puce ou autre support portable,
- la figure 2 représente schématiquement sous forme de blocs un système selon l'invention pour la distribution d'une tension d'alimentation dans le microcircuit de la figure 1,
- la figure 3 est le schéma électrique d'un circuit de commande d'un interrupteur, représenté sous forme de bloc en figure 2,

- la figure 4 représente une variante de réalisation du circuit de commande de la figure 3,
- la figure 5 est le schéma électrique d'un circuit survolteur représenté sous la forme d'un bloc en figure 4,
- les figures 6A à 6E illustrent le fonctionnement du circuit survolteur de la figure 5,
- la figure 7 est le schéma électrique d'un détecteur d'une tension alternative, représenté sous la forme d'un bloc en figure 2, et
- la figure 8 représente un autre mode de réalisation du détecteur de la figure 7.

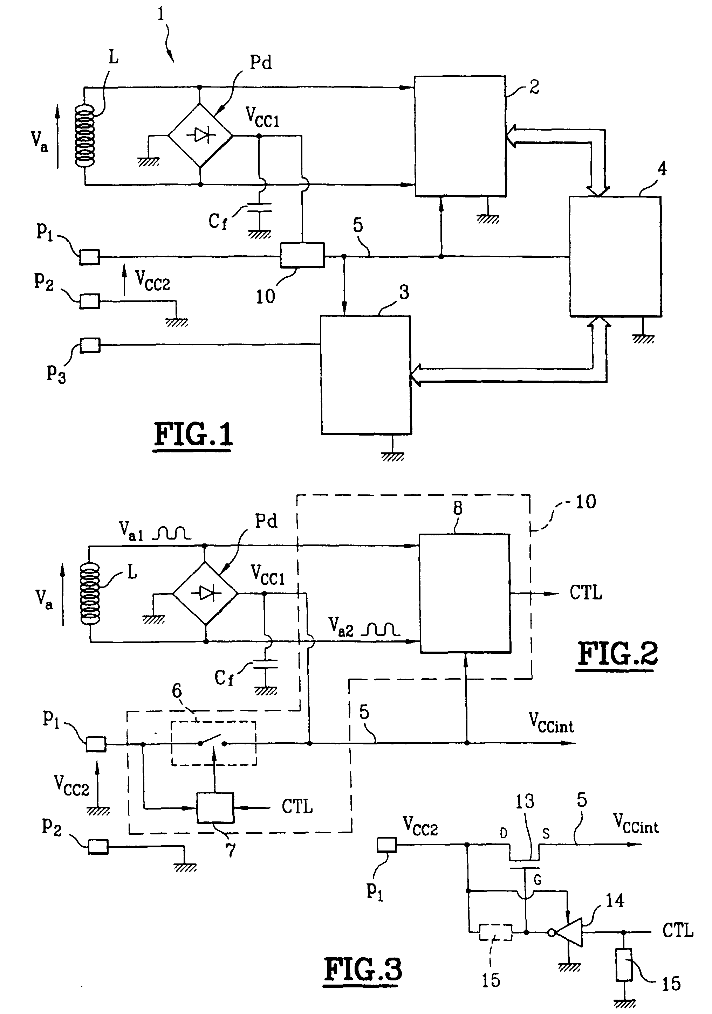

La figure 1 représente très schématiquement l'architecture générale d'un microcircuit à deux modes de fonctionnement selon l'invention, applicable à une carte à puce ou tout autre support portable de circuit intégré. Les moyens électroniques présents dans le microcircuit 1 sont représentés sous forme de trois blocs 2, 3, 4. Le bloc 2 représente l'ensemble des moyens électroniques spécifiques à la communication en mode sans contact, le bloc 3 l'ensemble des moyens spécifiques à la communication en mode contact et le bloc 4 représente des moyens communs aux deux modes de fonctionnement, chaque moyen étant fonctionnellement et matériellement distincts des autres moyens.

Dans le mode sans contact, le microcircuit est plongé dans un champ magnétique oscillant émis par exemple par un lecteur de carte à puce. Le bloc 2 reçoit des données numériques par l'intermédiaire d'une bobine L aux bornes de laquelle apparaît, par induction électromagnétique, une tension alternative Va modulée en amplitude ou en fréquence. Ainsi, par exemple, le bloc 2 comprend un circuit démodulateur, un circuit générateur ou extracteur d'un signal d'horloge; et un circuit assurant la gestion du protocole de communication sans contact, y compris, de façon optionnelle, la gestion des collisions de communication. Les fonctions réalisées par le bloc 2 sont en elles-mêmes classiques dans les circuits fonctionnant exclusivement sans contact. Par ailleurs, la tension alternative Va est redressée par un pont redresseur Pd, à diodes ou à transistors, qui délivre par l'intermédiaire d'une capacité de filtrage Cf la tension Vcc1 d'alimentation du mode sans contact. Bien entendu, en pratique, la bobine L peut être réalisée sous la forme d'un seul ou de plusieurs enroulements, et comprendre par exemple de façon classique une première bobine pour la réception de l'énergie électrique et une deuxième bobine pour la transmission des données.

En mode contact, le microcircuit reçoit une tension d'alimentation Vcc2, en général une tension continue, par l'intermédiaire d'un plot d'alimentation p1 et d'un plot p2 connecté à la masse. La tension Vcc2 peut être appliquée sur le plot p1 par un dispositif externe comme un lecteur de carte à puce ou bien une pile d'accumulateurs solidaire du support du microcircuit. Classiquement, le bloc 3 reçoit et émet des données numériques par l'intermédiaire d'un plot de contact p3. D'autres plots normalisés, non représentés en figure 1, peuvent être prévus pour appliquer au bloc 3 un signal d'horloge et un signal de remise à zéro RST. Le bloc 3 assure la gestion du protocole de communication en mode contact, la synchronisation des données, etc., ces fonctions étant en elles-mêmes classiques dans les microcircuits de cartes à puces à contact.

Enfin, le bloc 4 intervient dans les deux modes de fonctionnement, et comprend les ressources communes au deux modes de fonctionnement, par exemple une mémoire EEPROM programmable et effaçable électriquement, pour stocker des données d'identification, de transaction,... Le bloc 4 peut également comprendre un microprocesseur ou des moyens à logique câblée pour réaliser des opérations classiques de haut niveau, par exemple de génération d'un code d'authentification par cryptographie, de vérification d'un code secret présenté par un lecteur de carte, d'enregistrement de données dans la mémoire, etc., certaines parties de ces moyens pouvant toutefois être reportées dans les blocs 2 et 3.

La communication de données entre le bloc 4 et les blocs 2 et 3 peut être obtenue par tout moyen, par exemple par des échanges de paquets de données en parallèle par l'intermédiaire de circuits tampons. Il n'y a pas, à l'intérieur du circuit selon l'invention, obligation de normaliser le transfert des données entre le bloc 4 et les autres blocs et de prévoir une conversion de protocole. Egalement, le bloc 4 peut comporter un port d'entrées/sorties pour les données venant du bloc 3 et un autre port d'entrées/sorties pour les données venant du bloc 4, etc.., au choix de l'homme de l'art.

La distribution de l'une des tensions d'alimentation électrique Vcc1 ou Vcc2 aux blocs 2, 3 et 4, par l'intermédiaire d'une ligne de distribution interne 5, est assurée par un système de distribution 10 selon l'invention, représenté plus en détail en figure 2.

Le système 10 comprend un interrupteur 6 disposé entre le plot p1 et la ligne de distribution 5, alors que la sortie du pont redresseur Pd est ici directement connectée à la ligne de distribution 5. L'interrupteur 6 est commandé par un circuit 7 recevant sur une première entrée la tension Vcc2 et sur une deuxième entrée un signal CTL. Le signal CTL est délivré par un détecteur 8 de la tension alternative Va, connecté aux bornes de la bobine L et alimenté par la tension Vccint. Par convention, on considérera par la suite que le signal CTL délivré par le détecteur 8 est à 1 quand la tension alternative Va est présente sur la bobine L, et à 0 dans le cas contraire. Le fonctionnement du circuit de commande 7 est le suivant :

1) quand la tension Vcc2 n'est pas nulle et le signal CTL à 0 (pas de tension Va sur la bobine L), le circuit 7 ferme l'interrupteur 6 de sorte que la tension Vcc2 est présente sur la ligne de distribution 5.

2) quand le signal CTL est à 1 (détection de la tension Va sur la bobine L). le circuit 7 ouvre prioritairement l'interrupteur 6, que la tension Vcc2 soit nulle ou ne soit pas nulle, de sorte que seule la tension Vcc1 issue du redressement de la tension Va est présente sur la ligne de distribution 5.

Un troisième cas, secondaire, est celui où la tension Vcc2 sur le plot p1 est nulle et le signal CTL à 0. Aucune des deux tensions Vcc1 ou Vcc2 n'étant présente, l'état de l'interrupteur 6 est sans importance et celui-ci sera généralement fermé faute d'alimentation.

Ainsi, lorsque les tensions Vcc1 et Vcc2 ne sont pas nulles, le circuit de commande 7 donne la priorité à la tension Vcc1 en ouvrant l'interrupteur 6. Le système 10 selon l'invention permet de gérer les éventuels conflits entre les tensions Vcc1 et Vcc2 à la mise sous tension et protège également la ligne de distribution 5 contre d'éventuelles décharges électrostatiques venant du plot p1.

Bien entendu, le système 10 n'intervient qu'à la mise sous tension. Une fois la tension d'alimentation stabilisée, l'état du système 10 peut être verrouillé par tout moyen, par exemple au moyen du signal classique POR (Power On Reset) présent dans la plupart des microcircuits avec ou sans contacts.

Par ailleurs, la discrimination du mode sans contact par une détection directe de la tension Va sur la bobine L est un aspect de la présente invention permettant d'ouvrir rapidement l'interrupteur 6 dès l'instant ou la bobine L se trouve en présence d'un champ magnétique inducteur. Notamment, le détecteur 8 peut être réalisé sous la forme d'un détecteur d'oscillation, plus rapide qu'un détecteur à seuil, comme on le verra plus loin.

La figure 3 représente un exemple de réalisation de l'interrupteur 6 et du circuit de commande 7. L'interrupteur est ici un transistor NMOS 13 dont le drain D est connecté au plot p1 et la source S connectée à la ligne de distribution 5. Le circuit de commande prend la forme d'une porte inverseuse 14 recevant en entrée le signal CTL et dont la sortie attaque la grille G du transistor 13. Afin d'assurer la fermeture du transistor 13 lorsque la tension Vcc2 apparaît (c'est-à-dire avant que la tension Vcc2 ne soit présente sur la ligne de distribution 5), la borne d'alimentation de la porte inverseuse 14 est connectée au plot p1 et reçoit directement la tension Vcc2. Egalement, l'entrée de la porte logique 14 est connectée à la masse par l'intermédiaire d'une résistance de stabilisation 15 de forte valeur afin d'être maintenue à 0 en l'absence du signal CTL. Comme représenté en traits pointillés, la résistance 15 peut également être disposée entre la sortie de la porte 14 et la tension Vcc2. Enfin, si par une convention inverse le signal CTL devait être à 0 au lieu de 1 quand la tension Va est détectée sur la bobine L, une autre porte inverseuse devrait être ajoutée en série avec la porte 14.

Avec le mode de réalisation qui vient d'être décrit, il apparaît que la tension Vccint présente sur la ligne de distribution 5 est sensiblement inférieure à la tension Vcc2 en raison de la tension de seuil VT du transistor 13, généralement de l'ordre de 1 volt pour un transistor MOS. Ce problème est moins critique qu'une chute de tension sur la tension d'alimentation du mode sans contact, car il est possible d'augmenter la tension Vcc2 du mode contact par un simple réglage des niveaux de tension dans les lecteurs de cartes à puce, alors que la tension Vcc1 du mode sans contact dépend de la distance entre carte à puce et lecteur de carte. Toutefois, une telle perte de tension peut n'être pas souhaitable quand la tension fournie Vcc2 est assez faible, par exemple en raison de résistances de contact parasites entre le lecteur de carte et le plot de contact p1, ou lorsque la tension Vcc2 est fournie par une pile d'accumulateurs.

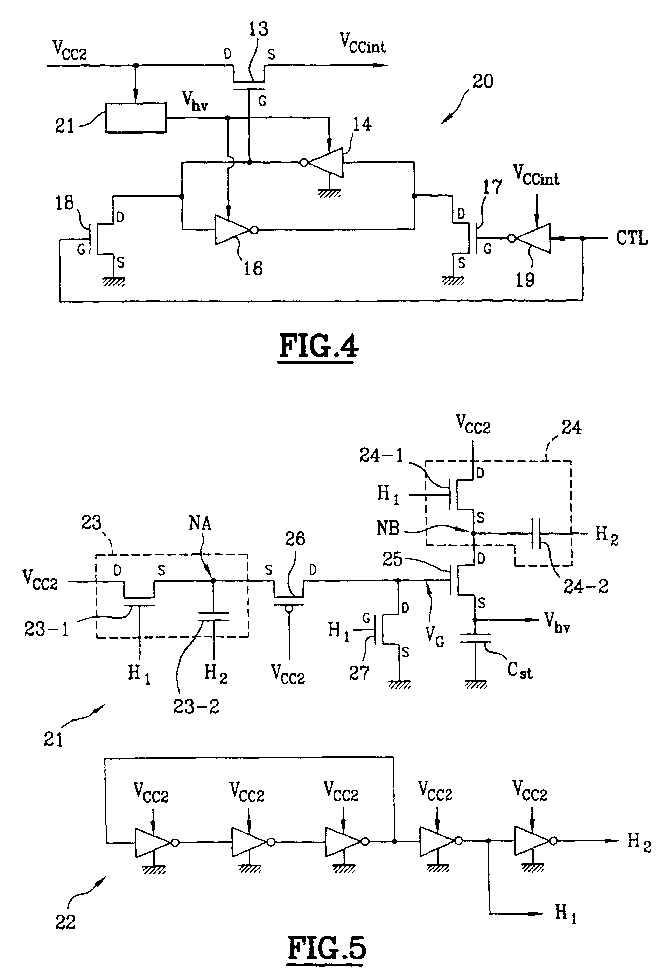

La figure 4 représente un mode de réalisation 20 du circuit de commande permettant de pallier cet inconvénient. Le circuit de commande 20 comprend un circuit survolteur 21 de la tension Vcc2 dont la sortie délivre une tension Vhv. De préférence, la tension Vhv est au moins égale à [Vcc2 + VT] de manière à compenser la tension de seuil VT du transistor 13. La tension Vhv est appliquée sur la borne d'alimentation de la porte inverseuse 14 dont le niveau logique "1" devient ainsi égal à Vhv.

De plus, le circuit de commande 20 représenté en figure 4 est conçu pour assurer l'isolation de la tension Vhv par rapport à la tension Vccint, laquelle représente le niveau logique "1" du signal CTL. A cet effet, la sortie de la porte inverseuse 14 attaque l'entrée d'une autre porte inverseuse 16 dont la sortie est ramenée sur l'entrée de la porte 14, l'ensemble formant ainsi une porte inverseuse bidirectionnelle. Chacune des entrées des portes 14 et 16 est connectée au drain D d'un transistor NMOS de référence 17, respectivement 18, dont la source S est connectée à la masse. Enfin, la grille G du transistor 18 est commandée par le signal CTL et celle du transistor 17 par un signal inverse du signal CTL, délivré par une porte inverseuse 19.

Le circuit de commande 20 fonctionne comme une porte inverseuse : le signal CTL à 0 rend le transistor 17 passant par l'intermédiaire de la porte 19, le transistor 17 passant met à 0 l'entrée de la porte 14 et la sortie de la porte 14 délivre la tension Vhv sur la grille G du transistor 13.

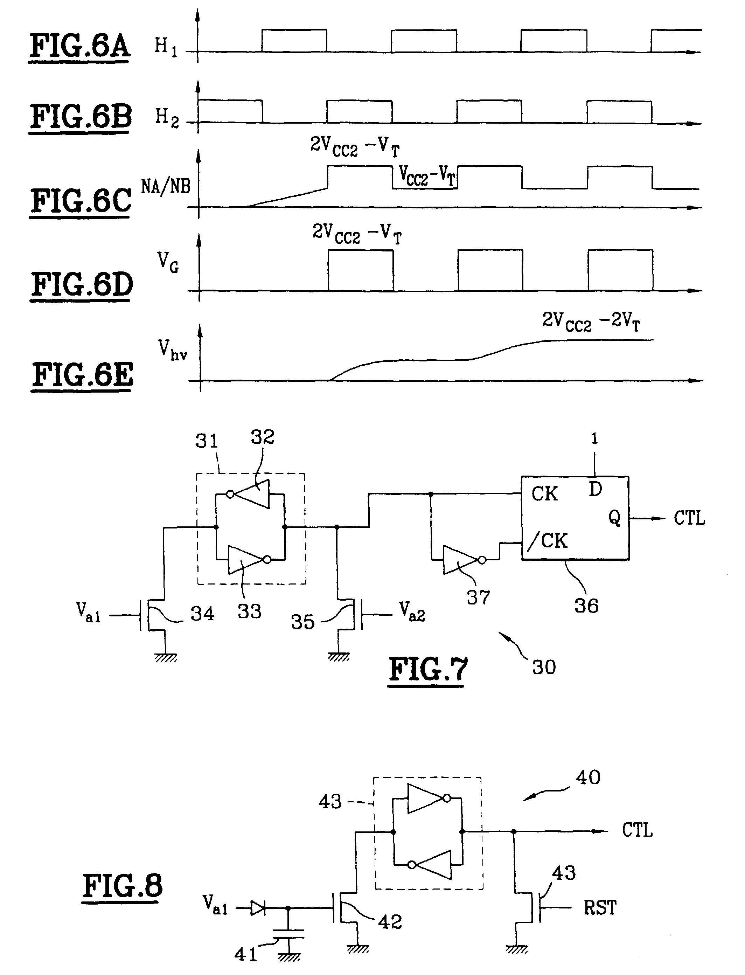

La figure 5 représente un exemple de réalisation du circuit survolteur 21 avantageux en raison de sa simplicité, ici un doubleur de tension fonctionnant selon le principe des pompes de charges. Le circuit 21 est entraîné par deux signaux carrés en opposition de phase H1, H2, d'amplitude Vcc2, délivrés par un oscillateur 22. L'oscillateur 22 comprend, de façon classique, une boucle fermée d'un nombre impair de portes inverseuses en cascade. La forme des signaux H1 et H2 est illustrée par les figures 6A et 6B. Le circuit survolteur 21 comprend deux pompes de charges 23, 24 comprenant chacune un transistor NMOS 23-1, 24-1 recevant sur son drain D la tension Vcc2, et une capacité 23-2, 24-2 connectée à la source S du transistor. La grille G des transistors 23-1, 24-1 est attaquée par le signal H1 et la borne libre des capacités 23-2, 24-2 par le signal H2. Sur les sorties des pompes de charges 23 et 24, repérées par des noeuds NA et NB, on trouve, après un temps de stabilisation, une tension oscillant entre les niveaux n1 et n2 suivants :

$$n1 = Vcc2 - VT, \text{ quand } H1 = 1 \text{ et } H2 = 0,$$

et

$$n2 = 2Vcc2 - VT, \text{ quand } H1 = 0 \text{ et } H2 = 1$$

VT étant la tension de seuil des transistors NMOS. Pour fixer les idées, la tension des noeuds NA et NB est représentée en figure 6C.

La tension au noeud NB est appliquée sur le drain D d'un transistor NMOS 25 dont la source S est connectée à une capacité de stockage Cst délivrant la tension Vhv. La grille du transistor 25, de tension VG, est pilotée par le noeud NA par l'intermédiaire d'un transistor PMOS 26 recevant sur sa grille G la tension Vcc2, le rôle du transistor 26 étant d'isoler la tension VG du noeud NA quand le signal H1 est à 1. Quand la tension VG est ainsi isolée du noeud NA, un transistor NMOS 27 piloté par le signal H1 connecte à la masse la grille G du transistor 25 afin de bloquer ce transistor et éviter une fuite de la tension Vhv vers le noeud NB. Ainsi commandé, le transistor 25 ne laisse traverser que le niveau n2 de la tension au noeud NB et assure la charge rapide de la capacité Cst à une valeur égale au niveau n2 auquel est retranchée la tension de seuil VT du transistor 25, soit:

$$Vhv = 2Vcc2 - 2VT$$

Pour fixer les idées, la figure 6D représente l'aspect de la tension VG et la figure 6E représente une courbe illustrant l'apparition de la tension survoltée Vhv.
La figure 7 représente un exemple de réalisation avantageux du détecteur 8, sous la forme d'un détecteur d'oscillation 30. Le détecteur 30 comprend une porte inverseuse bidirectionnelle 31 formée par deux portes inverseuses 32, 33 montées tête-bêche, dont l'entrée et la sortie peuvent être mises à 0 par deux transistors MOS 34, 35 pilotés respectivement par les demi-alternances positives Va1 et négatives Va2 de la tension Va. Une bascule D de référence 36 à deux entrées complémentaires d'horloge CK et /CK, est connectée par l'entrée CK à la porte bidirectionnelle 31, l'entrée CK étant ramenée sur l'entrée /CK par l'intermédiaire d'une porte inverseuse 37. L'entrée D de la bascule 36 est maintenue à 1 (c'est-à-dire à la tension Vccint) et la sortie Q délivre le signal CTL. Ainsi, lorsqu'une oscillation apparaît aux bornes de la bobine L, les transistors 34 et 35 sont rendus passant l'un après l'autre. La bascule D voit tout d'abord un front montant sur son entrée CK puis un front montant sur son entrée /CK. La sortie Q recopie alors l'entrée D et le signal CTL passe à 1.
Comme on l'a indiqué plus haut, l'état du système de distribution 10 peut être verrouillé une fois la tension d'alimentation Vcc1 ou Vcc2 stabilisée. Par exemple, sur la figure 7, le signal CTL peut être verrouillé au moyen d'une deuxième bascule D recevant sur son entrée D le signal CTL et sur son entrée d'horloge le signal classique POR de mise sous tension.
Le détecteur d'oscillation 30 qui vient d'être décrit présente l'avantage d'être particulièrement rapide, une seule oscillation complète de la tension Va (c'est-à-dire deux demi-alternances Va1 et Va2) étant suffisante pour faire passer le signal CTL à 1. Sur la figure 8, on a représenté un autre mode de réalisation du détecteur 8, prenant la forme d'un détecteur à seuil 40. Bien que plus lent à déclencher, ce circuit 40 peut également être utilisé. Une demi-alternance de la tension Va, par exemple Va1, est appliquée par l'intermédiaire d'une diode à une capacité 41, que l'on choisira de préférence de faible valeur. La capacité 41 attaque la grille d'un transistor NMOS 42. Le transistor 42 est connecté entre la masse et l'entrée d'une porte inverseuse bidirectionnelle 43, dont la sortie délivre le signal CTL. Lorsque la charge de la capacité 41 atteint la tension de seuil VT du transistor 42, le transistor 42 devient passant et met à 0 l'entrée de la porte 43 dont la sortie CTL passe à 1. Un transistor 43 de remise à 0, piloté par un signal RST, peut être prévu à la sortie de la porte bidirectionnelle 43.
Dans ce qui précède, on a décrit divers modes de réalisation de la présente invention dans lesquels l'interrupteur 6 de la figure 2 prend la forme d'un transistor NMOS. Il apparaîtra toutefois clairement à l'homme de l'art que plusieurs transistors ou tout autre moyen de commutation peuvent être prévus pour réaliser la fonction interrupteur. En particulier, l'homme de l'art notera qu'un transistor-interrupteur NMOS à l'état ouvert (non passant) permet d'arrêter des décharges électrostatiques de tension positive vis-à-vis de la masse mais laisse traverser des décharges électrostatiques de tension négative. Ainsi, selon un mode de réalisation de la présente invention, on ajoute en série avec le transistor NMOS un transistor PMOS servant de barrière aux décharges électrostatiques de tension négative.
La présente invention est par ailleurs susceptible de nombreuses autres variantes de réalisation et perfectionnements, en ce qui concerne le circuit de commande de l'interrupteur, le détecteur de la tension alternative aux bornes de la bobine, etc.
De plus, la présente invention est susceptible de diverses applications. Ainsi, en se reportant conjointement aux figures 1 et 2, s'il est impératif que le bloc 4 du microcircuit soit connecté à la ligne de distribution interne 5 pour être alimenté dans les deux modes de fonctionnement du microcircuit 1, l'entrée d'alimentation du bloc 3 peut par contre être directement connectée au plot p1, par exemple si les caractéristiques électriques du bloc 3 sont incompatibles avec la tension redressée Vcc1.

Enfin, il peut être noté que le système de distribution de tension qui vient d'être décrit comprend un minimum d'éléments permettant d'arriver au résultat recherché avec un coût minimum et un encombrement réduit à la surface de silicium d'un microcircuit. Toutefois, rien ne s'oppose à ce que d'autres moyens interrupteurs soient prévus, par exemple un interrupteur disposé entre la sortie du pont de diode Pd délivrant la tension redressée Vcc1 et la ligne de distribution 5, à la condition de commander cet interrupteur, conformément à l'un des objectifs de l'invention, par un circuit survolteur afin de ne pas diminuer le périmètre de communication sans contact entre une carte à puce et son lecteur. Cet interrupteur supplémentaire peut par exemple être fermé quand la tension Vcc1 apparaît, et ouvert dans les autres cas, et permettre d'isoler de la tension Vcc2 les circuits spécifiques au mode de fonctionnement sans contact.

**Revendications**

1. Microcircuit à deux modes de fonctionnement, avec ou sans contact, comprenant :

   - des moyens de communication (2) spécifiques au mode de fonctionnement sans contact, des moyens de communication (3) spécifiques au mode de fonctionnement avec contact, et des moyens électroniques (4) communs aux deux modes de fonctionnement,
   - une bobine (L) pour recevoir par induction une tension alternative (Va),
   - un circuit redresseur (Pd) de ladite tension alternative (Va) pour délivrer une première tension d'alimentation (Vcc1) du microcircuit, - au moins un plot d'alimentation (p1) pour recevoir une deuxième tension d'alimentation (Vcc2) du microcircuit,
   - une ligne (5) de distribution de la première (Vcc1) ou de la deuxième (Vcc2) tension d'alimentation,
   - un moyen interrupteur (6, 13) agencé entre le plot d'alimentation (P1) et la ligne de distribution (5), et
   - des moyens (7, 8, 20, 21, 30, 40) de commande du moyen interrupteur,

   caractérisé en ce que les moyens de commande du moyen interrupteur comprennent :

   - des moyens de détection (8, 30, 40) agencés pour détecter aux bornes de la bobine (L) la présence de la tension alternative (Va) et délivrer un signal de contrôle (CTL) distinct de la première tension d'alimentation (Vcc1), le signal de contrôle (CTL) présentant une première valeur quand la tension alternative (Va) n'est pas détectée et une deuxième valeur quand la tension alternative (Va) est détectée, et
   - des moyens (7, 20, 21) de fermeture et d'ouverture du moyen interrupteur (6, 13), agencés pour fermer le moyen interrupteur quand la deuxième tension d'alimentation (Vcc2) est présente et que le signal de contrôle (CTL) présente ladite première valeur, et ouvrir prioritairement le moyen interrupteur quand le signal de contrôle présente ladite deuxième valeur.

2. Microcircuit selon la revendication 1, caractérisé en ce que :

   - les moyens (7, 20, 21) de fermeture et d'ouverture du moyen interrupteur (6, 13) sont alimentés à partir du plot d'alimentation (p1), de sorte qu'en l'absence de la deuxième tension d'alimentation (Vcc2) les moyens (7, 20, 21) de fermeture et d'ouverture sont désactivés et le moyen interrupteur reste dans l'état ouvert.

3. Microcircuit selon l'une des revendications 1 et 2, dans lequel la sortie du circuit redresseur (Pd) est connectée directement et en permanence à la ligne de distribution (5).

4. Microcircuit selon l'une des revendications 1 à 3, dans lequel lesdits moyens de détection comprennent un détecteur (30) d'oscillations de la tension alternative (Va).

5. Microcircuit selon l'une des revendications 1 à 3, dans lequel lesdits moyens de détection comprennent un détecteur à seuil (40) de la tension alternative.

6. Microcircuit selon l'une des revendications précédentes, dans lequel les moyens (20) de fermeture et d'ouverture du moyen interrupteur (6, 13) comprennent un circuit survolteur (21) délivrant une tension survoltée (Vhv) de fermeture du moyen interrupteur.

7. Microcircuit selon la revendication 6, dans lequel le circuit survolteur (21) comprend une première pompe de charges (24) dont la sortie est appliquée à une capacité de stockage (Cst) par l'intermédiaire d'un transistor (25) piloté par une deuxième pompe de charges (23) fonctionnant en phase avec la première pompe de charges.

8. Microcircuit selon l'une des revendications précédentes, dans lequel le moyen interrupteur (6, 13) comprend un transistor (13) présentant une tension de seuil de conduction (VT).

9. Microcircuit selon la revendication 8, dans lequel le moyen interrupteur (6) comprend un transistor NMOS (16) et un transistor PMOS en série.

10. Microcircuit selon l'une des revendications précédentes, dans lequel les moyens de communication spécifiques au mode contact (3) sont alimentés à partir du plot d'alimentation (p1), et les moyens (4) communs aux deux modes de fonctionnement sont alimentés à partir de la ligne de distribution (5).

11. Carte à puce comprenant un microcircuit selon l'une des revendications précédentes.

**Patentansprüche**

1. Mikroschaltung mit zwei Arbeitsmoden, mit oder ohne Kontakt, umfassend:

   - Kommunikationsmittel (2), welche für den Arbeitsmodus ohne Kontakt spezifisch sind, Kommunikationsmittel (3), welche für den Arbeitsmodus mit Kontakt spezifisch sind, und elektronische Mittel (4), welche den beiden Arbeitsmoden gemeinsam sind,

   - eine Spule (L), um durch Induktion eine Wechselspannung (Va) zu empfangen,

   - eine Schaltung (Pd) zum Gleichrichten der Wechselspannung (Va), um eine erste Versorgungsspannung (Vcc1) der Mikroschaltung zu liefern,

   - mindestens eine Versorgungsverbindung (p1) zum Empfangen einer zweiten Versorgungsspannung (Vcc2) der Mikroschaltung,

   - eine Leitung (5) zur Verteilung der ersten (Vcc1) oder der zweiten (Vcc2) Versorgungsspannung,

   - ein Unterbrechungsmittel (6, 13), das zwischen der Versorgungsverbindung (P1) und der Verteilungsleitung (5) eingerichtet ist, und

   - Befehlsmittel (7, 8, 20, 21, 30, 40) des Unterbrechungsmittels,

   dadurch gekennzeichnet, dass die Befehlsmittel des Unterbrechungsmittels umfassen:

   - Erfassungsmittel (8, 30, 40), die eingerichtet sind, um an den Anschlüssen der Spule (L) das Vorhandensein einer Wechselspannung (Va) zu erfassen und ein Steuersignal (CTL) zu liefern, das verschieden ist von der ersten Versorgungsspannung (Vcc1), wobei das Steuersignal (CTL) einen ersten Wert hat, wenn die Wechselspannung (Va) nicht erfaßt wird, und einen zweiten Wert, wenn die Wechselspannung (Va) erfaßt wird, und

   - Mittel (7, 20, 21) zum Schließen und Öffnen des Unterbrechungsmittels (6, 13), die eingerichtet sind zum Schließen des Unterbrechungsmittels wenn die zweite Versorgungsspannung (Vcc2) vorliegt und das Steuersignal (CTL) den ersten Wert hat, und mit Priorität das Unterbrechungsmittel zu öffnen, wenn das Steuersignal den zweiten Wert hat.

2. Mikroschaltung nach Anspruch 1, dadurch gekennzeichnet, dass:

   - die Mittel (7, 20, 21) zum Schließen und Öffnen des Unterbrechungsmittels (6, 13) ausgehend von der Versorgungsverbindung (P1) gespeist werden, auf solche Weise, dass bei einem Fehlen der zweiten Versorgungsspannung (Vcc2) die Mittel (7, 20, 21) zum Schließen und Öffnen deaktiviert sind, und das Unterbrechungsmittel im offenen Zustand bleibt.

3. Mikroschaltung nach Anspruch 1 oder 2, bei dem der Ausgang der Gleichrichterschaltung (Pd) direkt und permanent mit der Verteilungsleitung (5) verbunden ist.

4. Mikroschaltung nach einem der Ansprüche 1 bis 3, bei der die Erfassungsmittel einen Detektor (30) für Oszillationen der Wechselspannung (Va) umfassen.

5. Mikroschaltung nach einem der Ansprüche 1 bis 3, bei der die Erfassungsmittel einen Schwellwertdetektor (40) der Wechselspannung umfassen.

6. Mikroschaltung nach einem der vorangegangenen Ansprüche, bei dem die Mittel (20) zum Schließen und Öffnen des Unterbrechungsmittels (6, 13) eine Spannungserhöhungsschaltung (21) umfassen, welche eine erhöhte Spannung (Vhv) zum Schließen des Unterbrechungsmittels liefert.

7. Mikroschaltung nach Anspruch 6, bei der die Spannungserhöhungsschaltung (21) eine erste Ladungspumpe (24) umfasst, deren Ausgang angelegt ist an einen Speicherkondensator (Cst), unter Zwischenschaltung eines Transistors (25), der von einer zweiten Ladungspumpe (23) gesteuert wird, die in Phase mit der ersten Ladungspumpe arbeitet.

**8.** Mikroschaltung nach einem der vorangegangenen Ansprüche, bei der das Unterbrechungsmittel (6, 13) einen Transistor (13) umfasst, der eine Leitungs-Schwellenspannung (VT) liefert.

**9.** Mikroschaltung nach Anspruch 8, bei der das Unterbrechungsmittel (6) einen NMOS-Transistor (16) und einen PMOS-Transistor in Reihe umfasst.

**10.** Mikroschaltung nach einem der vorangegangenen Ansprüche, bei dem die Kommunikationsmittel, welche für den Kontaktmodus (3) spezifisch sind, ausgehend von der Versorgungsverbindung (p1) gespeist werden, und die Mittel (4), die den beiden Arbeitsmoden gemeinsam sind, ausgehend von der Verteilungsleitung (5) gespeist werden.

**11.** Chipkarte umfassend eine Mikroschaltung nach einem der vorangegangenen Ansprüche.

**Claims**

**1.** A microcircuit with two operating modes, with and without contact, comprising:

- communication means (2) which are specific to the contact-less operating mode, communication means (3) which are specific to the contact operating mode, and electronic means (4) which are common to the two operating modes,
- a coil (L) for receiving an ac voltage (Va) by induction,
- a rectifier circuit (Pd) for said ac voltage (Va) for delivering a first feed voltage (Vcc1) of the microcircuit,
- at least one feed terminal (p1) for receiving a second feed voltage (Vcc2) of the microcircuit,
- a line (5) for distribution of the first feed voltage (Vcc1) or the second feed voltage (Vcc2),
- a switch means (6, 13) arranged between the feed terminal (p1) and the distribution line (5), and
- means (7, 8, 20, 21, 30, 40) for controlling the switch means,

    characterised in that the means for controlling the switch means comprise:

- detection means (8, 30, 40) arranged to detect at the terminals of the coil (L) the presence of the ac voltage (Va) and to deliver a monitoring signal (CTL) which is distinct from the first feed voltage (Vcc1), the monitoring signal (CTL) being of a first value when the ac voltage (Va) is not detected and a second value when the ac voltage (Va) is detected, and
- means (7, 20, 21) for closing and opening the switch means (6, 13), which are arranged to close the switch means when the second feed voltage (Vcc2) is present and the monitoring signal (CTL) is of said first value, and to open with priority the switch means when the monitoring signal is of said second value.

**2.** A microcircuit according to claim 1 characterised in that:

- the means (7, 20, 21) for closing and opening the switch means (6, 13) are fed from the feed terminal (p1) in such a way that, in the absence of the second feed voltage (Vcc2), the closing and opening means (7, 20, 21) are deactivated and the switch means remains in the open state.

**3.** A microcircuit according to one of claims 1 and 2 wherein the output of the rectifier circuit (Pd) is directly connected permanently to the distribution line (5).

**4.** A microcircuit according to one of claims 1 to 3 wherein said detection means comprise a detector (30) for detecting oscillations of the ac voltage (Va).

**5.** A microcircuit according to one of claims 1 to 3 wherein said detection means comprise a threshold detector (40) for the ac voltage.

**6.** A microcircuit according to one of the preceding claims wherein the means (20) for closing and opening the switch means (6, 13) comprise a booster circuit (21) delivering a boosted voltage (Vhv) for closure of the switch means.

**7.** A microcircuit according to claim 6 wherein the booster circuit (21) comprises a first charge pump (24) whose output is applied to a storage capacitor (Cst) by way of a transistor (25) pilot-controlled by a second charge pump (23) operating in phase with the first charge pump.

**8.** A microcircuit according to one of the preceding claims wherein the switch means (6, 13) comprises a transistor (13) having a conduction threshold voltage (VT).

**9.** A microcircuit according to claim 8 wherein the switch means (6) comprises an NMOS-transistor (16) and a PMOS transistor in series.

**10.** A microcircuit according to one of the preceding claims wherein the communication means which are specific to the contact mode (3) are fed from the feed terminal (p1) and the means (4) which are common to the two operating modes are fed from the distribution line (5).

11. A chip card comprising a microcircuit according to one of the preceding claims.

**FIG.1**

**FIG.2**

**FIG.3**

EP 0 917 684 B1

**FIG.4**

**FIG.5**

FIG.6A  $H_1$

FIG.6B  $H_2$

FIG.6C  NA/NB  $2V_{CC2} - V_T$  $V_{CC2} - V_T$

FIG.6D  $V_G$  $2V_{CC2} - V_T$

FIG.6E  $V_{hv}$  $2V_{CC2} - 2V_T$

FIG.7

$V_{a1}$  $V_{a2}$  CK  D  Q  CTL  /CK

FIG.8

$V_{a1}$  CTL  RST